(19) Europäisches Patentamt / European Patent Office / Office européen des brevets

(11) **EP 2 905 959 A1**

(12) **EUROPEAN PATENT APPLICATION**

(43) Date of publication:
**12.08.2015 Bulletin 2015/33**

(51) Int Cl.:
**H04N 13/04** $^{(2006.01)}$

(21) Application number: **14183376.4**

(22) Date of filing: **03.09.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Koninklijke Philips N.V.**
**5656 AE Eindhoven (NL)**

(72) Inventor: **The designation of the inventor has not yet been filed**

(74) Representative: **Debets, René Jozef Willem et al**
**Philips Intellectual Property & Standards**
**P.O. Box 220**
**5600 AE Eindhoven (NL)**

(54) **Autostereoscopic display device**

(57)　An autostereoscopic display has a particular design of display panel. The display has an array of display pixels arranged in orthogonal rows and columns of color sub-pixels. A view forming arrangement is for projecting a plurality of views towards a user in different directions, and it comprises elongate elements which extend at an acute slant angle to the column direction of the color sub-pixels. Each sub-pixel comprises a plurality of individually addressable sub-pixel light output areas stacked generally in the column direction.

Each light output area has a corresponding output intensity profile along the width direction of an associated elongate element. In a preferred implementation the intensity profiles are at the same width direction position with respect to a closest portion of the associated elongate element. The different areas are thus projected to the same view and banding as well as cross talk can be reduced.

FIG. 12

**Description**

FIELD OF THE INVENTION

This invention relates to an autostereoscopic display device which comprises a display panel having an array of display pixels, and an arrangement for directing different views to different physical locations.
Within the context of this application, the following definitions are used:

- A 'sub-pixel' comprises a light-modulating element that is independently addressable, e.g., by use of at least one row line and one column line. A sub-pixel is also referred to as an addressable independent color component. Typically, a sub-pixel comprises an active matrix cell circuit. Light may be provided in response to image data, i.e., image values, received in the sub-pixel, by altering emission, reflectance, and/or transmission of light in the sub-pixel. Note that the light may be produced in the sub-pixel itself, or the light may originate in a light source external to the sub-pixel, e.g., for use in a projector such as an LCD projector. A sub-pixel is also referred to as a 'cell'. The image data may be represented digitally, especially outside the panel. For example, one way of representing an image value is as a single byte, having a range of 0-255; the 50% point of which may be selected as 127. However, in the sub-pixel, the image value may be received as an analog value, say as a voltage.
- A 'pixel' is a smallest group of collocated sub-pixels that can produce all colors that the display is capable of producing. A pixel is also referred to as an independent full color addressable component.
- A 'sub-pixel area' or 'sub-area within a sub-pixel' is a light-modulating element within a sub-pixel, where the light-modulating function is controlled by the active matrix sub-pixel cell circuit. A sub-pixel area is also referred to as a dependent color addressable component. All sub-pixel areas in a sub-pixel share the same image value, but two different sub-pixel areas may respond in a different manner.

A sub-pixel with a single sub-area is referred to as monolithic. A sub-pixel may have multiple sub-areas.

BACKGROUND OF THE INVENTION

A known autostereoscopic display device comprises a two-dimensional liquid crystal display panel having a row and column array of display pixels acting as an image forming means to produce a display. An array of elongated lenses extending parallel to one another overlies the display pixel array and acts as a view forming means. These are known as "lenticular lenses". Outputs from the display pixels are projected through these lenticular lenses, which function to modify the directions of the outputs.
The lenticular lenses are provided as a sheet of lens elements, each of which comprises an elongate semi-cylindrical lens element. The lenticular lenses extend in the column direction of the display panel, with each lenticular lens overlying a respective group of two or more adjacent columns of display sub-pixels.
Each lenticular lens can be associated with two columns of display sub-pixels to enable a user to observe a single stereoscopic image. Instead, each lenticular lens can be associated with a group of three or more adjacent display sub-pixels in the row direction. Corresponding columns of display sub-pixels in each group are arranged appropriately to provide a vertical slice from a respective two dimensional sub-image. As a user's head is moved from left to right a series of successive, different, stereoscopic views are observed creating, for example, a look-around impression.
The above described autostereoscopic display device produces a display having good levels of brightness. However, one problem associated with the device is that the views projected by the lenticular sheet are separated by dark zones caused by "imaging" of the non-emitting black matrix which typically defines the display sub-pixel array. These dark zones are readily observed by a user as brightness non-uniformities in the form of dark vertical bands spaced across the display. The bands move across the display as the user moves from left to right and the pitch of the bands changes as the user moves towards or away from the display.
This banding problem arises in particular because current autostereoscopic displays employ a matrix of pixels that are square in shape. In order to generate images in color, the pixels are divided into sub-pixels. Traditionally, each pixel is divided into 3 sub-pixels, transmitting or emitting red (R), green (G) and blue (B) light, respectively. Sub-pixels of equal color are typically arranged in columns. This is the structure of the most standard RGB panel, with so-called RGB-stripes. Each sub-pixel is surrounded by the black matrix. It is the regularity of the pixel grid (and color distribution) combined with the magnification of the lenticular lens which causes the banding problem.
Another problem is that vertically aligned lenses result in a reduction in resolution in the horizontal direction only, while the resolution in the vertical direction is not altered.
Both of these issues can be at least partly addressed by the well known technique of slanting the lenticular lenses at an acute angle relative to the column direction of the display pixel array, for example as described in US 6064424A1. The use of slanted lenses is thus recognised as an essential feature to produce different views with near constant brightness, and a good RGB distribution behind the lenses. The slanting of the lenses distributes the resolution loss between horizontal and vertical direction. In addition, the amplitude of the non-uniformities can be reduced. It remains difficult, however, to reduce the intensity modulation depth introduced by imaging the black matrix to a level below which the non-uniformities remain perceivable and distracting for a user.

Another approach for reducing the amplitude of the non-uniformities is the so-called fractional view arrangement, which is described in detail in WO 2006/117707 A2. Devices having a fractional view arrangement are characterised in that the pitch of the slanted lenticular lenses is not equal to an integer number times the pitch of the (smallest) display pixels (i.e. the sub-pixel pitch in a color display), and in that the pixels under successive lenticular lenses are positioned in a horizontally alternating fashion. As a result, the successive lenses simultaneously project different amounts of the black matrix, leading to intensity modulations which are mutually shifted in phase. The first harmonic of the total intensity cancels out, leaving a much less intense non-uniformity effect.

According to this approach, the intensity modulation depth introduced by imaging the black matrix may be reduced significantly. Rendering of the views is, however, more complicated and therefore more computationally intensive.

Another important aspect is a relationship between the display sub-pixel sizes and shapes and the way the 2D sub-pixels are mapped to sub-pixels of the 3D images.

Some display panels now include multiple addressed areas per sub-pixel. These enable part of the modulation of the pixel brightness at the display panel itself, by enabling different areas of the sub-pixels to be addressed. This can for example give an increased number of different brightness levels and better control of low brightness values. This also enables increased use of black and white areas instead of mid-level greys, which can give improved LCD uniformity over oblique angles.

These types of pixel introduce further banding issues when used in an autostereoscopic display, and there is therefore a need to enable such display panels to be used effectively in an autostereoscopic display.

SUMMARY OF THE INVENTION

The invention is defined by the claims.

According to an example, there is provided an autostereoscopic display device comprising:

a display having an array of display pixels for producing a display image, wherein the display pixels are arranged in orthogonal rows and columns of color sub-pixels; and

a view forming arrangement arranged in registration with the display for projecting a plurality of views towards a user in different directions,

wherein the view forming arrangement comprises elongate elements which extend at an acute slant angle to the column direction of the color sub-pixels, each sub-pixel being associated with a closest one of the elongate elements, wherein each sub-pixel comprises a plurality of individually addressable sub-pixel light output areas stacked generally in the column direction,

wherein each sub-pixel light output area has a corresponding light output intensity profile along the width direction of the associated elongate element, wherein the sub-pixel light output areas are offset from the column direction such that the intensity profiles are closer together along the width direction.

The nature of the intensity profile will be explained. Each position within a sub-pixel light output area is directly beneath a corresponding part of the elongate element. The relative position (in the width direction) between that position within the sub-pixel light output area and the elongate element determines the direction in which the generated light is output. The intensity profile is the integration over all of the light output area of the sub-pixel for each relative width position. In this way it shows the spread of light output directions resulting from the sub-pixel light output area. By having intensity profiles for different sub-areas closer together in the width direction, they contribute to closer viewing directions.

By "closer together in the width direction" is meant closer together than would be the case for sub-pixel light output areas which are not offset from the column direction.

The invention thus relates to a display in which each sub-pixel is divided into different areas (but they are addressed with the same image data).

The sub-pixel light output areas generate a light intensity profile across the elongate element width direction.

The significance of this intensity profile is that different positions along the width direction of the elongate elements translate to different view directions.

The intensity profiles are brought closer together (in terms of the width direction position) as explained above. This means that the sub-pixel light output areas are positioned so that they are mapped to closer together view output directions. This avoids spreading of the combined intensity profile of the overall sub-pixel.

The intensity profile is preferably symmetric about a centre line, when projected from the elongate element width direction to the row direction. The significance of projecting the intensity profile to the row direction is that this is the way the view moves, i.e. from left to right or right to left. In this way, the transition between views is the same when a viewer moves left to right or right to left.

The centre lines of these projected intensity profiles are preferably at the same position. This means each sub-pixel light output area is generally directed (i.e. the centre line of its intensity profile is directed) to the same view direction.

These matched positions can be achieved by having the sub-pixel light output areas slanted in the same way to the slant of the view forming elements. The different light output areas are thus projected to the same view and banding as well as cross talk can be reduced.

Preferably, each sub-pixel light output area has a centre of area, wherein the centres of area are aligned along a line parallel to the elongate elements. This is an example of how to achieve the intensity profiles aligned at the same width position of the elongate elements.

There may be two light output areas per sub-pixel. These are generally stacked one above the other, but with the desired slant.

Each pixel may comprise at least three sub-pixels having different colors, e.g. a red, green and blue sub-pixel, arranged in the row direction. In this way, the display can be based on a standard RGB pixel layout.

Each sub-pixel light output area may have the same shape, and each may produce a light intensity profile across the width direction in the form of a rectangle, a triangle, a top hat or a raised cosine function.

Alternatively, the sub-pixel light output areas may include at least two different shapes. Thus, there may be two different shaped areas, for example a square and a triangle.

Each sub-pixel light output area may be shaped individually to eliminate banding, and the slanted positioning of the areas then avoids the introduction of cross talk. Banding is avoided by making the intensity profile (when projected to the row/horizontal direction) decrease from its peak to the half intensity, and increase from zero to the half intensity, with same function. In this way, where adjacent intensity profiles overlap, the combined intensity viewed from any particular viewing angle is constant (assuming the display is providing a uniform output from all sub-pixels).

The view forming arrangement may comprise lenticular lenses. The tangent of the slant angle may for example be 1/9, or 1/6, or 1/3.

The device may comprise a switchable 2D/3D display, wherein the view forming arrangement is switchable. The invention is of particular interest for switchable displays as it enables a conventional or near convention configuration of the display panel for optimum operation in the 2D mode, and also allows low banding and low crosstalk operation in the 3D mode. The view forming arrangement may for example comprise lenticular lenses formed using a switchable liquid crystal material.

According to another example, there is provided a method for producing an autostereoscopic display output, comprising:

producing an image using a display (3) having an array of display pixels (5) arranged in orthogonal rows and columns of color sub-pixels, wherein each sub-pixel comprises a plurality of individually addressable sub-pixel light output areas (201,202) stacked generally in the column direction; and

projecting a plurality of views towards a user in different directions using a view forming arrangement (9) arranged in registration with the display, wherein the view forming arrangement comprises elongate elements (11) which extend at an acute slant angle to the column direction of the color sub-pixels, each sub-pixel being associated with a closest one of the elongate elements,

wherein each sub-pixel light output area has a corresponding light output intensity profile along the width direction of the associated elongate element, wherein the method comprises offsetting the sub-pixel light output areas from the column direction such that the intensity profiles are closer together along the width direction.

BRIEF DESCRIPTION OF THE DRAWINGS

Embodiments of the invention will now be described, purely by way of example, with reference to the accompanying drawings, in which:

Fig. 1 is a schematic perspective view of a known autostereoscopic display device;
Fig. 2 is a schematic cross sectional view of the display device shown in Fig. 1;
Fig. 3 shows brightness non-uniformities caused by imaging of the black matrix for three different pixel designs;
Fig. 4 shows how the known RGB pixel is projected by the lenticular arrangement in a known display;
Fig. 5 shows the known RGB pixel layout;
Fig. 6 shows parameters relating to the configuration of the 2D display panel and a projected 3D view;
Fig. 7 shows the intensity function corresponding to different pixel shapes;
Figs. 8 to 10 show the effect on banding and crosstalk for five views using a raised cosine intensity profile for different values of the width of the intensity profile;
Fig. 11 is used to show the problem of cross talk even when banding issues have been addressed;
Fig. 12 shows a first example of pixel layout for an autostereoscopic display as well as intensity profiles and light output patterns for different brightness values;
Fig. 13 shows a second example of pixel layout for an autostereoscopic display as well as intensity profiles and light output patterns for different brightness values;
Fig. 14 shows a third example of pixel layout for an autostereoscopic display as well as intensity profiles;
Fig. 15 shows a fourth example of pixel layout for an autostereoscopic display as well as intensity profiles; and
Fig. 16 shows a fifth example of pixel layout for an autostereoscopic display as well as intensity profiles.

DETAILED DESCRIPTION OF EMBODIMENTS

The invention provides an autostereoscopic display device with a particular design of display panel. The display has an array of display pixels arranged in orthogonal rows and columns of color sub-pixels. A view forming arrangement is for projecting a plurality of views towards a user in different directions, and it comprises elongate elements which extend at an acute slant angle to the column direction of the color sub-pixels. Each sub-pixel comprises a plurality of individually addressable sub-pixel light output areas stacked generally in the column direction.

Each sub-pixel light output area has a corresponding output intensity profile along the width direction of an associated elongate element. In a preferred implementation the intensity profiles are at the same width direction position with respect to a closest portion of the associated elongate element.

This can be achieved by slanting the positions of the sub-pixel light output areas in the same way as the slant of the view forming arrangement. The different areas are thus projected to the same view and banding as well as cross talk can be reduced.

Before describing the invention in detail, the configuration of a known autostereoscopic display will first be described.

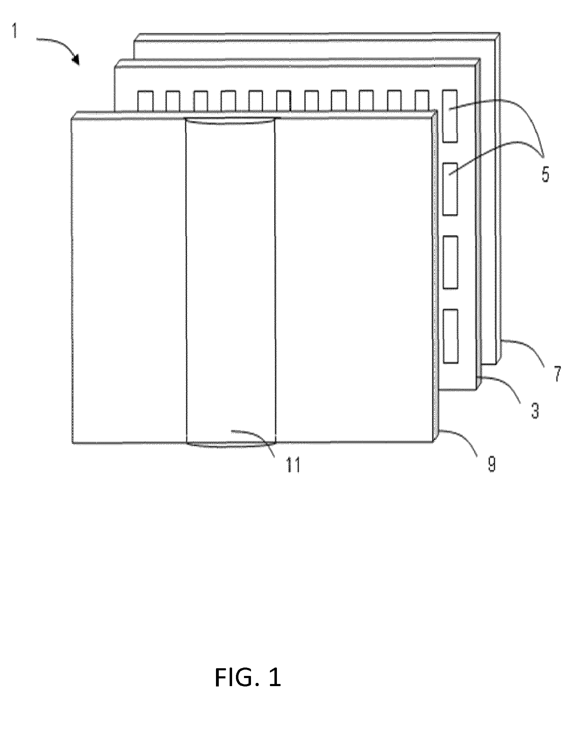

Fig. 1 is a schematic perspective view of a known multi-view autostereoscopic display device 1. The known device 1 comprises a liquid crystal display panel 3 of the active matrix type that acts as an image forming means to produce the display. The device can instead use OLED pixels.

The display panel 3 has an orthogonal array of display sub-pixels 5 arranged in rows and columns. For the sake of clarity, only a small number of display sub-pixels 5 are shown in Fig. 1. In practice, the display panel 3 might comprise about one thousand rows and several thousand columns of display sub-pixels 5.

The structure of the liquid crystal display panel 3 is entirely conventional. In particular, the panel 3 comprises a pair of spaced transparent glass substrates, between which an aligned twisted nematic or other liquid crystal material is provided. The substrates carry patterns of transparent indium tin oxide (ITO) electrodes on their facing surfaces. Polarising layers are also provided on the outer surfaces of the substrates.

Each display sub-pixel 5 comprises opposing electrodes on the substrates, with the intervening liquid crystal material therebetween. The shape and layout of the display sub-pixels 5 are determined by the shape and layout of the electrodes and a black matrix arrangement provided on the front of the panel 3. The display sub-pixels 5 are regularly spaced from one another by gaps.

Each display sub-pixel 5 is associated with a switching element, such as a thin film transistor (TFT) or thin film diode (TFD). The display sub-pixels are operated to produce the display by providing addressing signals to the switching elements, and suitable addressing schemes will be known to those skilled in the art.

The display panel 3 is illuminated by a light source 7 comprising, in this case, a planar backlight extending over the area of the display pixel array. Light from the light source 7 is directed through the display panel 3, with the individual display sub-pixels 5 being driven to modulate the light and produce the display.

The display device 1 also comprises a lenticular sheet 9, arranged over the display side of the display panel 3, which performs a view forming function. The lenticular sheet 9 comprises a row of lenticular lenses 11 extending parallel to one another, of which only one is shown with exaggerated dimensions for the sake of clarity. The lenticular lenses 11 act as view forming elements to perform a view forming function.

The lenticular lenses 11 are in the form of convex (semi-) cylindrical elements, and they act as a light output directing means to provide different images, or views, from the display panel 3 to the eyes of a user positioned in front of the display device 1.

The autostereoscopic display device 1 shown in Fig. 1 is capable of providing several different perspective views in different directions. In particular, each lenticular lens 11 overlies a small group of display sub-pixels 5 in each row. The lenticular element 11 projects each display sub-pixel 5 of a group in a different direction, so as to form the several different views. As the user's head moves from left to right, his/her eyes will receive different ones of the several views, in turn.

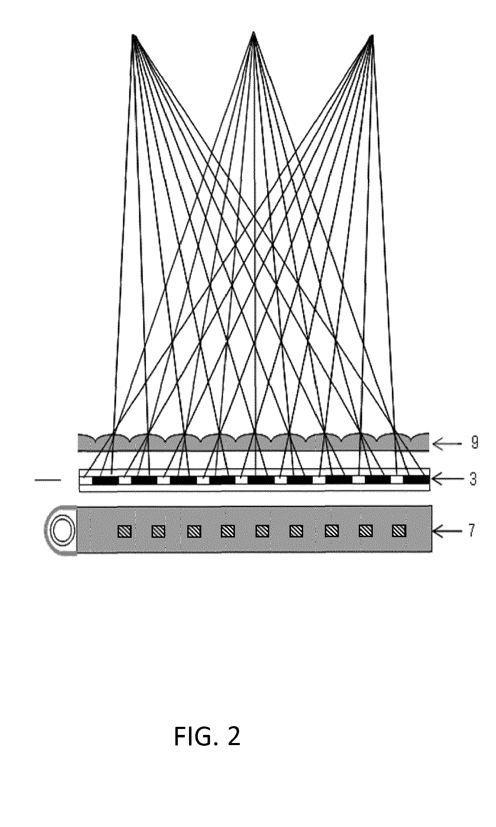

Fig. 2 shows the principle of operation of a lenticular type imaging arrangement as described above and shows the light source 7, display panel 3 and the lenticular sheet 9. The arrangement provides three views each projected in different directions. Each sub-pixel of the display panel 3 is driven with information for one specific view.

The above described autostereoscopic display device produces a display having good levels of brightness. However, a problem associated with the device is that the views projected by the lenticular sheet 9 are separated by dark zones caused by imaging of the non-emitting black matrix which defines the display pixel array. These dark zones are readily observed by a user as brightness non-uniformities in the form of dark vertical bands spaced across the display. The bands move across the display as the user moves from left to right and the pitch of the bands changes as the user moves towards or away from the display. The bands are particularly problematic in devices having a high proportion of their display area as black matrix, such as high resolution displays designed for mobile applications.

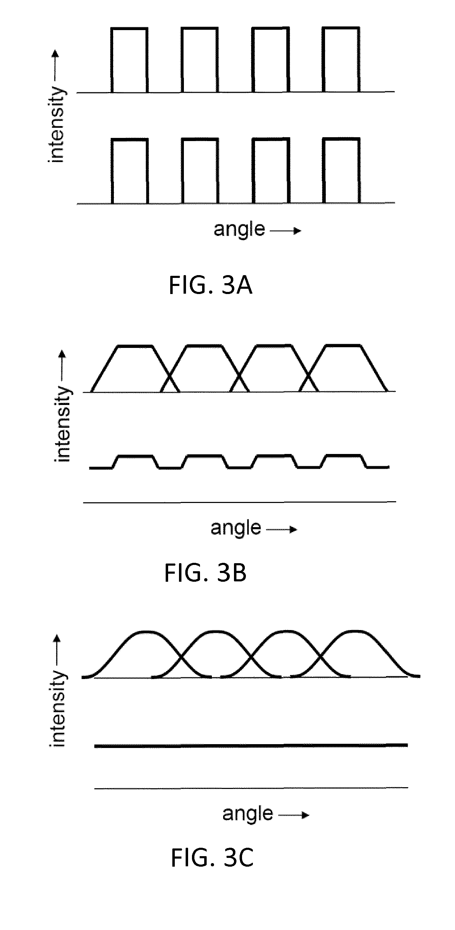

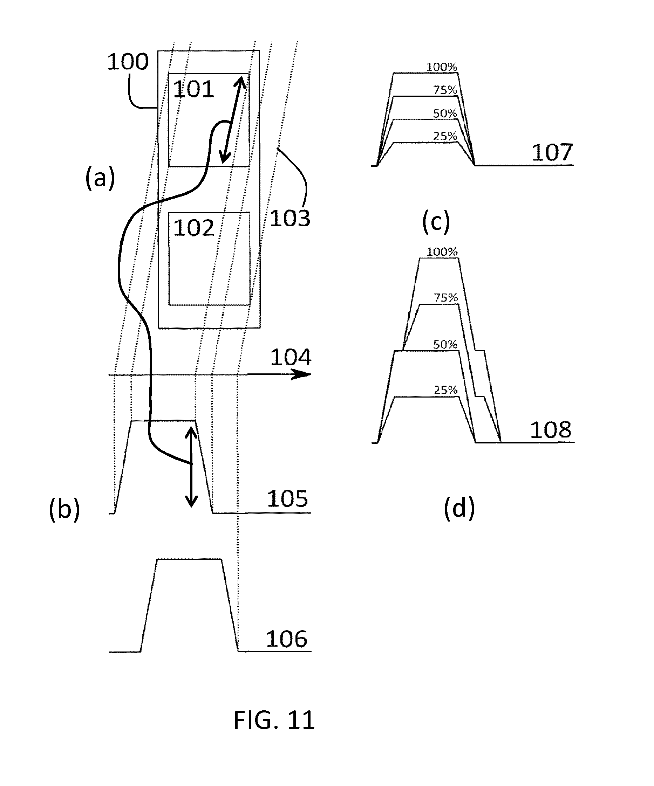

The brightness non-uniformities caused by imaging of the black matrix are illustrated in Fig. 3A, which shows generalised plots of brightness intensity against viewing angle for the display device shown in Figs. 1 and 2. The way these intensity profiles can be defined is explained further below with reference to Fig. 11.

The upper plot shows the contributions of the individual views, which contributions each have constant brightness intensity, interposed between the dark bands caused by imaging of the black matrix, which bands each have zero brightness intensity. The transition between views and dark bands is a step transition. The lower plot shows the cumulative effect of the contributions of the individual views, that is to say the brightness levels observed by the user moving across the front of the display. It can be seen from the lower plot that there is a significant modulation of the brightness intensity.

A number of approaches have been proposed for reducing the amplitude of the non-uniformities. For example, the amplitude of the non-uniformities can be reduced by the well known technique of slanting the lenticular lenses 11 at an acute angle relative to the column direction of the display pixel array. The resulting brightness non-uniformities are illustrated in Fig. 3B. In this Figure, the upper plot again shows the contributions of the individual views interposed between the dark bands caused by imaging of the black matrix. It can be seen that the transition between views and dark bands is gradual, with the brightness intensity changing at a constant rate. The lower plot shows the cumulative effect of the contributions of the individual views, and it can be seen that the intensity modulation depth introduced by imaging the black matrix is significantly reduced. However, it remains difficult to reduce this intensity modulation depth to below 1%, at which level the non-uniformities remain perceivable and distracting for a user.

Although the technique of slanting the lenticular lenses 11 may serve to reduce the perceived brightness non-uniformities caused by imaging of the black matrix, further significant reductions can advantageously be achieved by defocusing the lenticular lenses 11. According to this technique, the focal lengths of the lenticular lenses 11 are extended so that their focal points lie behind the plane of the display panel 3. The resulting brightness non-uniformities are illustrated in Fig. 3C. In the upper plot, it can be seen that the transition between views and dark bands is gradual, with intensity changing at a varying rate. The lower plot shows the cumulative effect of the contributions of the individual views, and it can be seen that the intensity modulation depth introduced by imaging the black matrix is almost completely eliminated.

The further reduction in the brightness non-uniformities obtained by defocusing the lenticular lenses 11 comes at the expense of introducing some cross-talk between the views, which is detrimental to the perceived three dimensional performance of the device. This cross-talk generally increases as the lenticular lenses 11 are defocused.

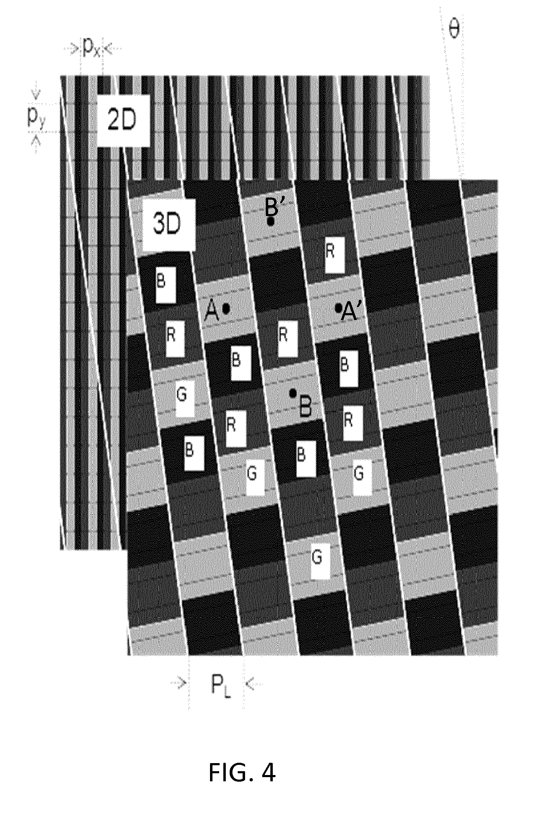

Whatever the mechanism used to obtain an auto-stereoscopic display system, resolution is traded for 3D depth: the more views, the higher the loss in resolution per view. This is illustrated in Fig. 4, which shows the native sub-pixel layout of the 2D display panel as well as, on the same scale, the sub-pixel layout in a 3D view obtained by putting a lenticular in front of the panel.

The sub-pixel layout shown for the 3D image represents the sub-pixel pattern as seen from one viewing direction. The same geometric sub-pixel pattern is seen from all viewing directions, but different sets of sub-pixels of the underlying 2D display are visible. For a given viewing direction as shown, a blue 3D sub-pixel is an image of one or more blue sub-pixels of the native 2D display (and the same applies for green and red).

The lenticular has a slant $s = \tan(\theta) = 1/6$ and a lens pitch $P_L = 2.5\, p_x$ (where $p_x$ in this case is shown as the full pixel pitch in the row direction, so that $P_L = 7.5$ expressed in units of the sub-pixel pitch in the row direction) resulting in 15 views. In this case, $p_x = p_y$.

The lens pitch is thus 7.5 when expressed as a number of sub-pixel dimensions in the row direction. This lens pitch can be defined by a value p in the horizontal direction, in units of the horizontal sub-pixel pitch $\Delta x$.

The 3D image has a repeating pattern of sub-pixels, and the colors of a few sub-pixels (R, G and B) are shown so that all colors in the pattern can be understood. Each color is output as a diamond shaped grid of sub-pixels which are interleaved with each other.

As seen in Fig. 4, for the particular viewing direction shown, each 3D sub-pixel has contributions from three 2D sub-pixels (each 3D sub-pixel is divided into three sections). This is because a line parallel to the lenticular lens axis (such as the lines shown over the 2D display panel) cross three sub-pixels of one color, followed by three sub-pixels of the next color, followed by three sub-pixels of the last color. For different viewing angle directions, there can instead be two full sub-pixels for each 3D sub-pixel.

The slant angle of the lenticular as well as its pitch should be chosen such that a number of requirements are fulfilled as much as possible:

(i) A favourable distribution of sub-pixels should be obtained for each 3D view.

In each of the 3D views the sub-pixels of each color should be distributed in a pattern that is regular and having a resolution that is similar for the horizontal and vertical direction. As shown in Fig. 4, the horizontal distance between neighbouring green sub-pixels (A to A' in Fig. 3) should be comparable to the vertical distance between neighbouring green sub-pixels (B to B'). This should hold for the other colors as well.

(ii) The surface area occupied by sub-pixels of the same colors should be equal for each 3D view.

(iii) Absence of moiré.

The combination of a lenticular in front of a display panel is very susceptible to the occurrence of moire, which is the banding problem discussed above caused by the combination of the periodicity of the sub-pixel and black mask layout of the display panel and the periodicity of the lenticular.

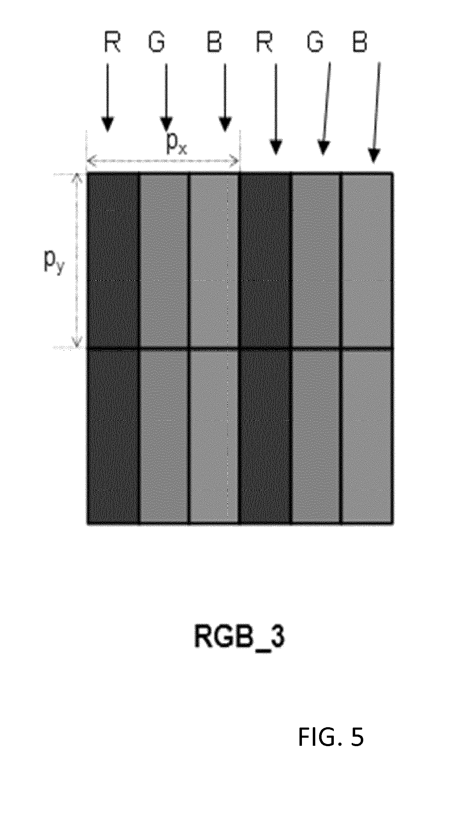

Fig. 5 shows a conventional RGB striped pixel layout. Each pixel has three sub-pixels, hence the subscript "3" in RGB_3. Pixel layouts using more than 3 primary colors are also known, and these are termed "multi-primary" pixel layouts. Several such multi-primary layouts have reached the market and are expected to become mainstream,
[0067] It is therefore desirable to be able to use this general pixel layout.

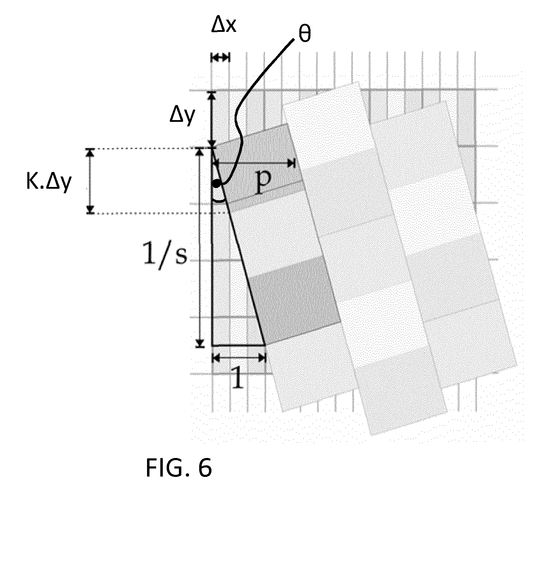

Fig. 6 shows schematically a 3D pixel layout that results from placing a lenticular lens with pitch p and slant s (where the slant is defined as the tangent of the angle to the vertical column direction, s=tanθ) on a striped underlying display panel. Fig. 6 is an enlarged view of one 3D pixel from Fig. 4. Note that the slant can be in either direction with respect to the column direction.
The pitch p is the row-direction width of the 3D sub-pixels, which corresponds to the row direction width of the lenticular lens (or barrier or microlens). This pitch is expressed in units of the native 2D display sub-pixel pitch in the row direction, so that in the example shown in Fig. 6, p=5.
The value K shown in Fig. 5 is the ratio of the height (in the column direction) of a 3D sub-pixel to the height of a 2D sub-pixel. Thus, the value K represents how many 2D sub-pixels contribute to each 3D sub-pixel. As shown, K is not necessarily an integer value, and Fig. 6 shows a value of K slightly greater than 1.
From Fig. 6 it follows that:

$$K\Delta y = \Delta x/s \qquad \text{Eq. 1}$$

When defining the sub-pixel aspect ratio *a* as

$$a \equiv \Delta x/\Delta y$$

the following expression for *K* results:

$$K = N_{2D}/N_{3D} = a/s. \qquad \text{Eq.2}$$

In order to make efficient use of the display sub-pixels in the generation of the views, one 2D sub-pixel should contribute to each 3D sub-pixel. Therefore the slant should to be close to the aspect ratio, as can be seen in Eq. 2. When slanted lenses are used, small values of slant are preferred. For example the preferred slant should be equal to or smaller than 1/3. Three examples of practical values are s = 1/3, s = 1/6 and s = 1/9.
Furthermore, the distribution of horizontal and vertical resolution should be approximately equal in the 3D mode.
For example, in order to have preferably square 3D pixels derived from a rectangular grid arrangement of 2D sub-pixels, the pitch (i.e. the width of the lenticular lenses, expressed as the number of display sub-pixels which fit into the lens width) can be chosen close to the value of *1/a*.

As explained above, non-integer pitch values will allow a reduction in banding even further. For integral pitch values *p* there are only *p* possible positions of the lens in relation to any sub-pixel on a row. When looking from an optimal position then some sub-pixels are fully visible while others are fully invisible. When shifting the panel with respect to the lens, or when looking at the display from a different angle, then all sub-pixels are at most partially visible. Clearly there are more and less preferred angles. A fractional pitch value addresses this problem my making all angles have a similar quality (hence also reducing banding).

Display sub-pixels having different relative position with respect to an individual lenticular lens contribute to the views in different angular directions. Both the sub-pixel layout and lenticular lens layout has a periodicity, and the number of views (also known as the phases or cone positions) is the minimum number of subpixels which are positioned differently with respect to the periodic lenticular lens. When the lens array is randomly positioned over the display panel, there are many different possible relative positions and consequently the spatial pattern of view numbers (also known as lens phases or cone positions) is generally irregular.

The pattern becomes regular when the value z= *sΔy/Δx,* and pitch value *p* are fractional numbers with low denominators. The value z may be considered to be a y-slant which indicates the shift in lens phase when moving down along a column by one row (and Eq. 1 shows that z=1/K).

The number of (fractional) views, for a fractional pitch p and fractional value z is:

$$N = p \operatorname{lcm}\big(\operatorname{den}(p), \operatorname{den}(z)\big),$$

where den(·) is for denominator of a fraction and 1cm(·,·) is the lowest common denominator of two arguments.

For example, for RGB pixels with aspect ratio 3:1, some examples of the results of this equation are:

(i) 5 view system

$$p = 5, s = 1 \Rightarrow z = 1, N = 5 \operatorname{lcm}( 1, 1 ) = 5$$

(ii) 9 view system

$$9 = 9/2, s = 1/6 \Rightarrow z = 1/2, N = 9/2 \operatorname{lcm}( 2, 2 ) = 9$$

(iii) 77 view system

$$p = 77/10, s = 1/6 \Rightarrow z = 1/2, N = 77/10 \operatorname{lcm}( 10, 2 ) = 77$$

The number of fractional views N is the number of unique relative positions of a sub-pixel under the lens. The above formula computes this number and is based on how quickly the pattern repeats in column and row direction.

It is possible eliminate banding based on the design of the sub-pixel shape.

One approach is to start with an initial sub-pixel shape and compute an intensity profile by integrating along the optical axes of the lens array. For a banding-free display the profile should be flat, but when the computed profile is not, the profile can be corrected by manipulating the shape or transmission characteristics of the sub-pixels. This may for example be achieved using a filter mask, for example using the techniques disclosed in WO2007/054851.

Another approach works for non-slanted and slanted designs with *N* full or fractional views. The sub-pixels should be shaped such that the width at half-height (w) of the intensity profile corresponds to *kp/N* for positive integer *k,* and lenticular pitch *p* measured along the horizontal direction. Also the intensity profile (as viewed by the viewer, i.e. in the horizontal direction) should have some self-symmetric properties, namely:

$$f(x) = f(-x) \; \forall \, x$$

$$f\left(\frac{w}{2} + x\right) = f(0) - f\left(\frac{w}{2} - x\right) \forall\, x \geq 0$$

The first of these defines a left-right symmetry along the x axis (which defines the position with respect to the lenticular width, and therefore the view direction). This means the transition between views is the same from left to right as from right to left.

The second defines an up-down symmetry along the intensity (f(x)) axis about the half intensity value. The effect of this is that the sum of two overlapping intensity profiles is always f(0). Thus, as the intensity of one profile decreases, the intensity of an overlapping profile increases to maintain a constant combined intensity. This gives a banding free transition between views.

Examples of suitable shapes for the intensity profile include the rectangle, triangle, flat top triangle and raised cosine functions.

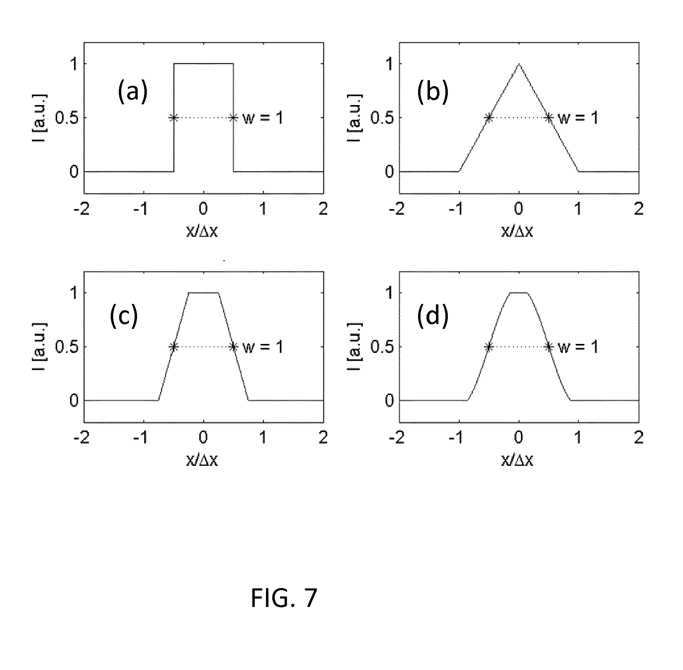

Fig. 7 shows the corresponding intensity functions with the rectangle shown in Fig. 7(a), the triangle shown in Fig. 7(b), the flat top triangle shown in Fig. 7(c) and the raised cosine shown in Fig. 7(d). In each case, w=1, where w is the width of the intensity profile at half height, as explained above. The y-axis plots the intensity "I" in arbitrary units ("a.u."), normalised to a maximum value of 1.

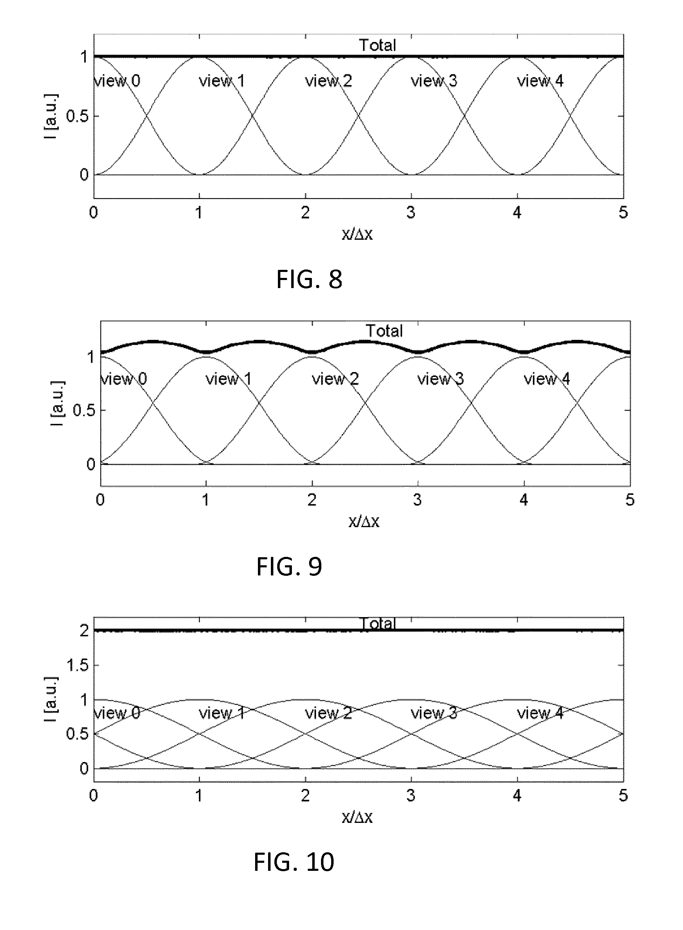

Figs. 8 to 10 show the effect on banding and crosstalk for five views (p=N=5) using a raised cosine profile for values w=1 in Fig. 8, w=1.1 in Fig. 9, and w=2 in Fig. 10. Fig. 10 shows that the increased width gives zero banding, but the intensity profile is twice as wide giving less view separation and more spatial resolution

Spatial resolution relates to how many sub-pixels are visible from each view point. When the intensity profiles are broader, the sub-pixels are more often visible and hence the spatial resolution is higher.

The first method is more useful for adapting an existing design while the second approach is appropriate for a design-from scratch approach.

The second approach means it is possible to design a virtually zero-crosstalk 3D lenticular display by creating a rectangular sub-pixel intensity profile and ensuring a good focus (i.e. narrow point spread function). This approach can be used for dual-view systems (stereo) and for multi-view systems with large 3D effect. It avoids the need for a defocus function as discussed above.

The disadvantage of the rectangular profile is that a viewer moving in respect to the display "clicks" through the views, suddenly switching perspective with each such click. It would require a lot of views to reduce the size of the clicks and generate smooth motion parallax (i.e. a look around effect) with a rectangular profile. Having a smoother profile such as a triangle or preferably a function that resembles a raised cosine gives some crosstalk but makes the experience more realistic.

The width of the profile w in relation to the lenticular pitch *p* is a good indication of the amount of crosstalk. This can be expressed as a ratio *p/w* that becomes bigger with lower crosstalk. This ratio can be interpreted as a generalization of the number of views because for a zero-banding/zero-crosstalk display, *p/w=N.*

For fractional view designs, *p/w < N* indicating that for each viewpoint multiple fractional views are visible and contribute to the spatial resolution.

When the viewer moves with respect to the display, the fractional views fade in and out to provide a continuous impression.

Modern TV panels have sub-pixels with multiple active areas with different gamma curves. The different areas can be driven independently but there is only one drive value per sub-pixel to control all of the areas. A light output value can be built up using progressively more areas. This means that better control of lower brightness values can be achieved, and a greater number of overall brightness levels can be defined. When modifying such a panel for the autostereoscopic application, banding has to be cancelled for each set of areas separately. If not, then a display might suffer from banding in low-, medium- or high light output regions of operation.

The invention is of particular interest for 2D/3D switchable lenticular displays based on the common RGB-striped layout, and where sub-pixels comprise multiple (two or more) sub-pixel light output areas. This pixel layout may be desired for the 2D mode. The invention provides an adaptation to improve the operation in the 3D mode without adversely affecting the desired operation in the 2D mode.

Assuming that banding is solved for such a display, there will still be remaining problems that relate to crosstalk. This is because the sub-pixel light output areas (i.e. the areas which make up a single sub-pixel) have a different view number but are addressed equally.

This issue is shown in Fig. 11.

Fig. 11(a) shows a sub-pixel 100 which is formed of two sub-pixel light output areas 101,102. Fig. 11(b) shows how the intensity profiles 105 and 106 of the sub-pixel light output areas 101 and 102 of the sub-pixel 100 (across the row direction 104) can be determined by integration along the lens slant direction 103.

Assuming a constant intensity over area, the intensity profiles 105,106 are based on the length of the sub-pixel light output area 101,102 at the particular position beneath the lenticular lens. This is shown in Fig. 11. Note that for a non-uniform intensity over area, the light intensity profile will need to take into account the the different intensities at different positions of the sub-pixel light output area.

Thus, each sub-pixel light output area 101,102 has a corresponding output intensity profile along the width direction of the associated lens (or more generally the width direction of the elongate view forming element). By "associated" is meant the lens which is over that sub-pixel. Each intensity profile is symmetric about a centre line once projected into the row direction (which is the direction moved by the viewer). It should be understood that to form the "intensity profile along the width direction" as used herein, all light contributions in the perpendicular direction (in the elongate element long axis direction) are summed, i.e. integrated, to arrive at the light intensity for that particular width position. The claims and description should be understood accordingly.

The intensity profile across the lenses is projected to the row direction to arrive at a profile which represents the way the intensity varies for a viewer moving left to right. This is the intensity profile which has left-right reflective symmetry as well as the banding free functionality.

For low brightness levels only one sub-pixel light output area 101 modulates the light output as shown in Fig. 11(c).

The percentage values show the brightness level applied to the sub-pixel light output area 101. In this case 100% is the maximum brightness for the single sub-pixel light output area 101, for example corresponding to a 50% overall brightness level for the full sub-pixel.

For higher brightness levels, both sub-pixel light output areas 101,102 are used. First, mainly the first sub-pixel light output area 101 modulates the light output, and then the second sub-pixel light output area is used to modulate the light output. This gives the brightness-dependent shape and position shown in Fig. 11(d).

The percentage values show the brightness level applied to overall sub-pixel. Overall brightness level 25% is achieved by driving the sub-pixel light output area 101 to 50% (and it can be seen that the shape corresponds to that in Fig. 11(c)). Overall brightness level 50% is achieved by driving the sub-pixel light output area 101 to 100% (and it can be seen that the shape corresponds to that in Fig. 11(c)).

For higher brightness, both sub-pixel light output areas are used. For example for overall brightness 75%, the first sub-pixel light output area 101 can be driven to 50% of its full brightness (contributing the first 25% of the overall sub-pixel brightness) and the second sub-pixel light output area 102 can be driven to 100% brightness (contributing the last 50% of the overall brightness). Other combinations are possible. For full brightness, both sub-pixel light output areas are fully driven.

A problem with this is that the width-wise position centre of the intensity profile of the overall sub-pixel depends on the brightness level of the sub-pixel. The view directing function of the lenticular lens causes this change in position to translate to a change in the direction of the emanating beam.

The shape and width of the intensity profile of a sub-pixel also depends on the brightness level of the sub-pixel. This corresponds to the width of the emanating beam changing.

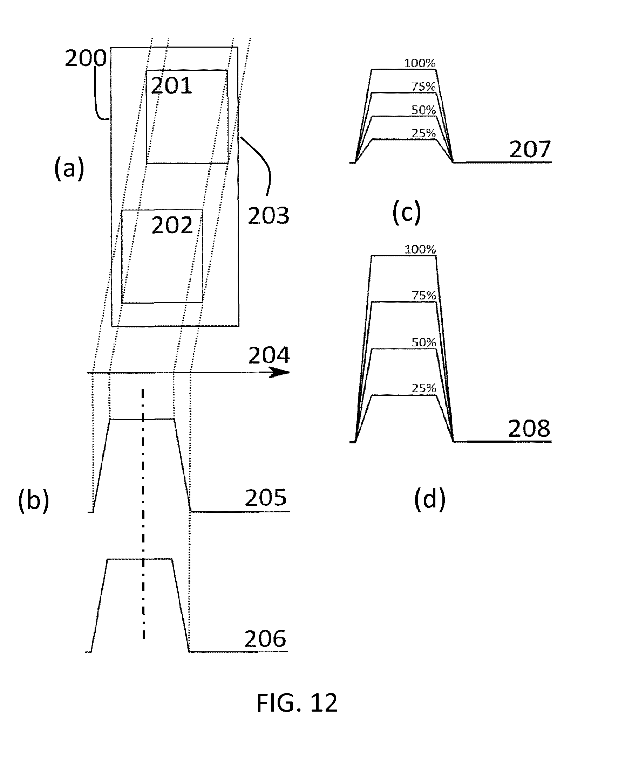

Fig. 12 shows a first example of pixel layout for an autostereoscopic display. Fig. 12(a) shows the native display with multiple active areas 201,202 per sub-pixel 200. The example shown has two such areas and they are both rectangles.

In this case, the centre line of each intensity profile 205,206 is at the same width direction position with respect to a closest portion of the associated lenticular (i.e. the part of the associated lenticular lens which is over the light output area and therefore controlling the direction in which the light is displayed).

This alignment of the intensity profiles is achieved by appropriate selection of the shapes and positions of the sub-pixel light output areas. As can be seen, each sub-pixel light output area 201,202 has a centre of area, and the centres of area are aligned parallel to the slant direction 203 of the lenticular lenses.

There may be three or more areas per sub-pixel. All such areas can have their intensity profiles aligned.

In this way, the areas forming the sub-pixel are shifted such that the centres of their respective intensity profiles 205,206 are closer as viewed along the slant direction, and preferably aligned.

In this way, zero-banding can be achieved for the overall sub-pixel, and low-crosstalk is enabled by using a modified RGB-striped layout.

Fig. 12(b) shows the intensity profiles 205 and 206 of the sub-pixel light output areas 201 and 202 of the sub-pixel 200, again determined by integration along the lens slant direction 203.

Fig. 12(c) shows the combined sub-pixel output for low brightness levels where only sub-pixel light output area 201 modulates the light output, and Fig. 12(d) shows the combined sub-pixel output for higher brightness levels when both areas are used.

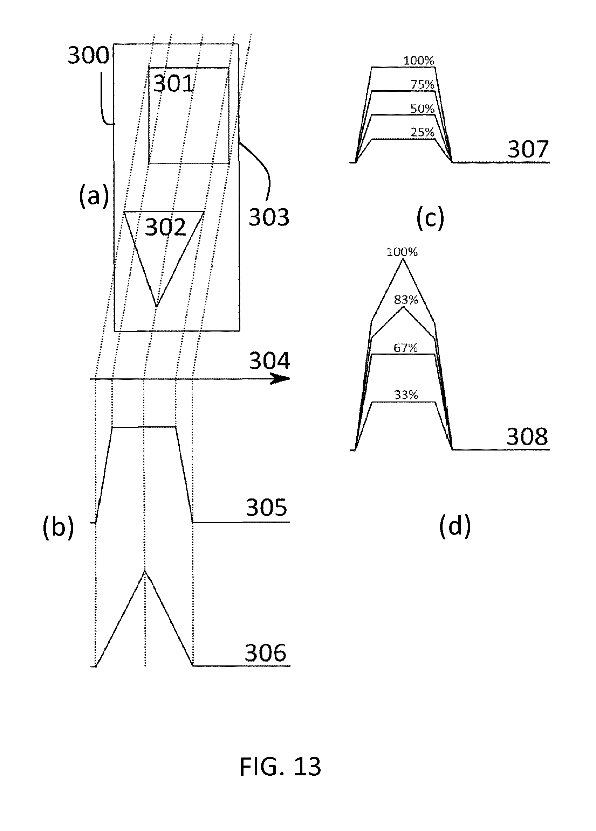

The percentages in Fig. 12 (and also in Fig. 13) represent the same drive conditions as in Fig. 11. Thus, the percentages in Fig. 12(c) and Fig. 13(c) are the drive levels for a single sub-pixel light output area, whereas the percentages in Fig. 12(d) and Fig. 13(d) are for the overall sub-pixel output brightness.

Fig. 12 shows full alignment of the sub-pixel light output areas within the sub-pixel in the lens slant direction, and this prevents brightness-dependent view number or crosstalk.

In addition to alignment, it is also possible to use area shapes that give symmetric intensity profiles of equal width such that the intensity profile of the sub-pixel becomes symmetric for all brightness levels.

Fig. 13 shows a second example of pixel layout for an autostereoscopic display. Fig. 13(a) shows the native display with multiple active areas 301,302 per sub-pixel 300. The example shown has one rectangular sub-pixel light output area 301 and one triangular sub-pixel light output area 302. The centre of the respective intensity profiles (as measured along the width direction) are again slanted in the same way as the lenticular slant direction 303.

Again, the areas forming the sub-pixel are shifted such that the centres of their respective intensity profiles 305,306 are closer as viewed along the lens width direction, and preferably aligned.

Fig. 13(b) shows the intensity profiles 305 and 306 of the sub-pixel light output areas 301 and 302 of the sub-pixel 300 when projected to the horizontal row direction. Fig. 13(c) shows the combined sub-pixel output for low brightness levels where only rectangular area 301 modulates the light output, and Fig. 13(d) shows the combined sub-pixel output for higher brightness levels when both areas are used.

Each individual intensity profile is left-right symmetric (along the row direction), thereby producing an intensity profile satisfying:

$$f(x) = f(-x) \; \forall \; x$$

Preferably, each individual area also satisfies the intensity symmetry:

$$f\left(\frac{w}{2} + x\right) = f(0) - f\left(\frac{w}{2} - x\right) \forall \; x \geq 0$$

To compensate for the brightness-dependent intensity profile shape or position, a brightness-dependent view and crosstalk filter can be used as part of the pixel signal processing.

The sub-pixel light output areas typically have a uniform output intensity over area. However, if the intensity varies over area, this can be taken into account when calculating the intensity profiles that will result.

There are various ways to perform the design process.

A first approach is for a zero-banding, zero-crosstalk multi-view 3D lenticular display, with discrete (clicking) views.

The process starts with a slanted 3D lenticular display that has N views and also $p = N$. Approximately rectangular profiles can be used with w = 1.

The areas in the sub-pixel are aligned to the slant direction to reduce or eliminate the shift intensity profile. This example is essentially as shown in Fig. 12.

A second approach is for a zero-banding, low-crosstalk (smooth) multi-view 3D lenticular display.

The process starts with a slanted 3D lenticular display with N views but as one example $p = N/2$ and $s = 1/6$.

Values for $N$ are $N = 3 + 6m$ for positive integer $m$.

Smoother profiles are used, such as the intensity profile of Fig. 7(d) and the parameters $p, N$ and w are chosen to achieve an acceptable balance between spatial and angular resolution.

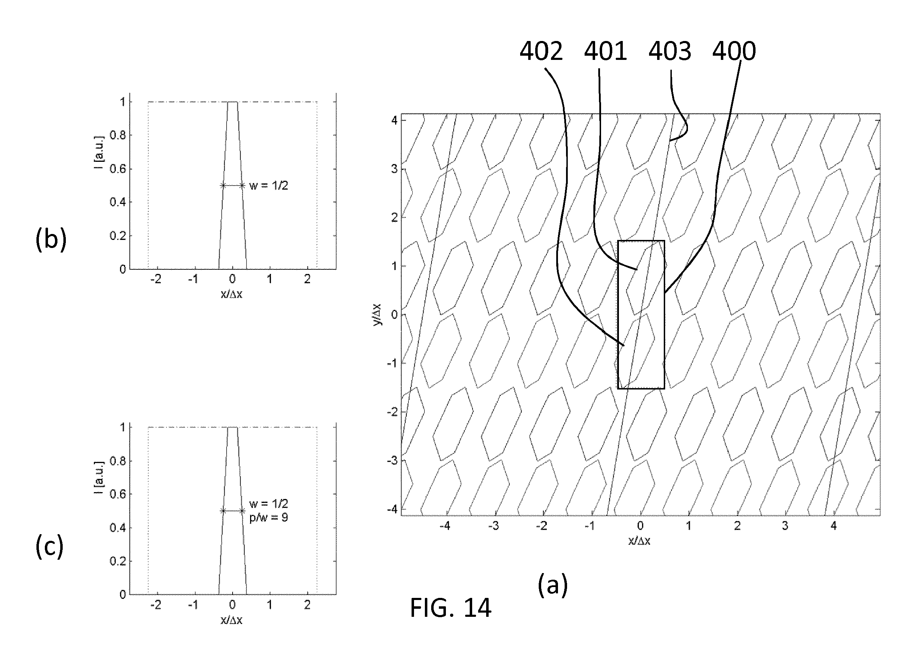

Fig. 14 shows an example of this approach. The pixel arrangement is shown in Fig. 14(a), with sub-pixels 400 which comprise two areas 401,402, with their centres aligned along the lenticular axis direction 403.

Fig. 14(b) shows the intensity profile for an individual area and Fig. 14(c) shows the intensity profile for the overall sub-pixel.

A third approach is for a high-aperture, zero-banding (smooth and bright) multi-view 3D lenticular display.

It is advantageous to have $N \gg p$, without making the design too irregular, because it allows to choose the intensity width w close to 1 to improve the sub-pixel aperture.

When w = 1, apertures would touch leaving no room for active matrix components, but $N/p = 2$ gives w = 1/2 meaning that the maximum aperture is only 50% of the area. For example, with $N/p = 4$, it is possible to set w = 3/4 for a maximum aperture of 75%.

In general, the maximum aperture is $(N - p)/N$. This maximum corresponds to $w = N/p - 1$.

The higher aperture reduces the view separation but the pitch can be enlarged to compensate.

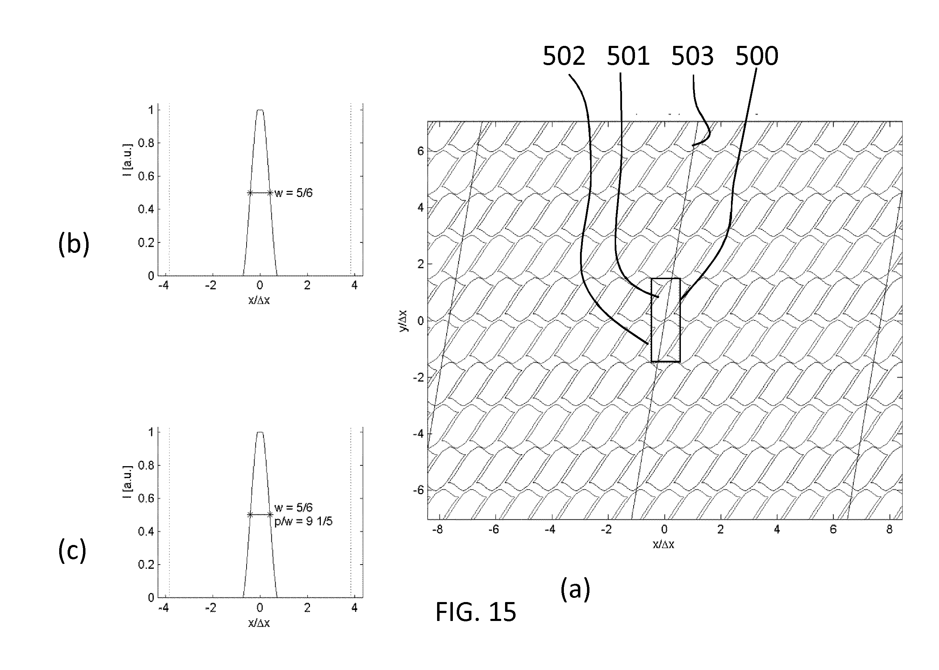

Fig. 15 shows a design in which w=5/6 and p=7.666. This fractional design gives N=28, and uses a modified raised cosine profile. The modification is to remove thin tails of the cosine function. The pixel arrangement is shown in Fig. 15(a), with sub-pixels 500 which comprise two sub-pixel light output areas 501,502, with their centres aligned along the lenticular axis direction 503. Fig. 15(b) shows the intensity profile for an individual area and Fig. 15(c) shows the intensity profile for the overall sub-pixel.

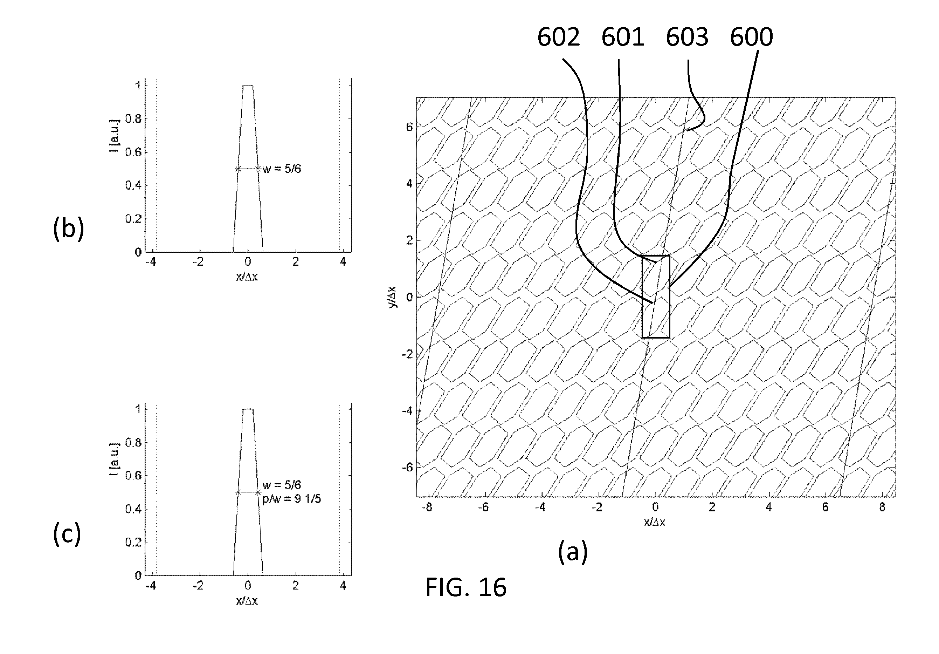

Fig. 16 shows a design corresponding to Fig. 15 but with a flat top profile. Again, w=5/6 and p=7.666 so that the fractional design gives N=28.

As for Fig. 15, the pixel arrangement is shown in Fig. 16(a), with sub-pixels 600 which comprise two sub-pixel light output areas 601,602, with their centres aligned along the lenticular axis direction 603. Fig. 16(b) shows the intensity profile for an individual sub-pixel light output area and Fig. 16(c) shows the intensity profile for the overall sub-pixel.

With equal cone angle and a larger pitch, glass thickness increases, so there is a trade-off between panel aperture (light output efficiency) and display stack thickness.

The examples above show the invention applied to lenticular lens displays. However, the concepts of the invention can be applied equally to autostereoscopic displays based on barriers.

In a barrier display, the barrier opening can be considered to be the "view forming element". Furthermore, it is the relative slant between sub-pixel columns and the lenticular (or barrier) axis which is important. Thus, lenticulars or barriers can be provided over the sub-pixel grid as described above.

As mentioned above, the invention is of interest for non-switchable or switchable autostereoscopic displays. Whilst autostereoscopic 3D displays provide excellent viewing experience for 3D video and pictures, a good 2D performance - as is required especially for viewing text - is obtainable only in displays where the autostereoscopic viewing arrangement is made switchable from the 2D to 3D mode. The same holds for full parallax autostereoscopic 3D displays based on microlenses.

There are many approaches to realise switchable 2D/3D displays. For example, one approach is described in US-A-6,069,650, the entirety of which is incorporated herein by reference. This device uses lenticular elements which include electro-optic material having a refractive index that is switchable in order to enable removal of the refracting effect of the lenticular elements.

In the two-dimensional mode, the lenticular elements of the switchable device operate in a "pass through" mode, i.e. they act in much the same way as would a flat sheet of optically transparent material. The resulting display has a high resolution, equal to the native resolution of the display panel, which is suitable for the display of small text characters from short viewing distances. The two-dimensional display mode cannot, of course, provide a stereoscopic image.

In the three-dimensional mode, the lenticular elements of the switchable device provide a light output directing function. The resulting display is capable of providing stereoscopic images, but also suffers the inevitable resolution loss mentioned above.

In order to provide switchable display modes, the lenticular elements of the switchable device use an electro-optic material, such as a liquid crystal material, having a refractive index that is switchable between two different values for polarized light. The device is then switched between the modes by applying an appropriate electrical potential to electrode layers provided above and below the lenticular elements. The electrical potential alters the refractive index of the lenticular elements in relation to that of an adjacent optically transparent layer. Alternatively, the adjacent optically transparent layer may be formed of the electro-optic material, with the same result that the refractive index of the lenticular elements in relation to the optically transparent layer is altered.

Further details of the implementation of the switching function will not be described as well known approaches can be used.

The examples above show perfect alignment of the intensity profiles, but this is not essential. The sub-pixel light output areas may be positioned along a slanted line which has a smaller slant angle than the lenticular slant. A reduction in width of the overall intensity profile can still be achieved and a reduction in view direction dependency on brightness levels, by bringing the view directions closer than for vertically stacked sub-pixel light output areas. The available space and desired pixel aperture will determine how much slant is desired in the sub-pixel light output areas.

The invention has been defined in terms of the light intensity profiles. The invention may alternatively be defined in terms of the sub-pixel light output area shapes and positions. For example, the invention provides (claim 14):

an autostereoscopic display device comprising:

a display having an array of display pixels for producing a display image, wherein the display pixels are arranged in orthogonal rows and columns of color sub-pixels; and
a view forming arrangement arranged in registration with the display for projecting a plurality of views towards a user in different directions,
wherein the view forming arrangement comprises elongate elements which extend at an acute slant angle to the column direction of the color sub-pixels, each sub-pixel being associated with a closest one of the elongate elements,
wherein each sub-pixel comprises a plurality of individually addressable sub-pixel light output areas stacked generally in the column direction,
wherein each sub-pixel light output area has a centre of area, wherein the centres of area are aligned along a line which is offset from the column direction to be closer to the direction parallel to the elongate elements. It is to be noted that the subject matter of all dependent claims 2-13 (referring directly or indirectly to claim 1) can equally be applied in combination with claim 14.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

**Claims**

1. An autostereoscopic display device comprising:

   a display (3) having an array of display pixels (5) for producing a display image, wherein the display pixels are arranged in orthogonal rows and columns of color sub-pixels; and
   a view forming arrangement (9) arranged in registration with the display for projecting a plurality of views towards a user in different directions,
   wherein the view forming arrangement comprises elongate elements (11) which extend at an acute slant angle to the column direction of the color sub-pixels, each sub-pixel being associated with a closest one of the elongate elements,
   wherein each sub-pixel comprises a plurality of individually addressable sub-pixel light output areas (201,202) stacked generally in the column direction,
   wherein each sub-pixel light output area has a corresponding light output intensity profile along the width direction of the associated elongate element, wherein the sub-pixel light output areas are offset from the column direction such that the intensity profiles are closer together along the width direction.

2. A device as claimed in claim 1, wherein each intensity profile is symmetric about a centre line, when projected from the elongate element width direction to the row direction.

3. A device as claimed in claim 2, wherein the centre lines of the intensity profiles are at the same width direction position.

4. A device as claimed in any preceding claim, wherein each light output area has a centre of area, wherein the centres of area are aligned along a line offset from the column direction toward the elongate element slant angle.

5. A device as claimed in claim 4, wherein the centres of area are aligned along a line parallel to the elongate elements.

6. A device as claimed in any preceding claim, comprising two areas per sub-pixel.

7. A device as claimed in any preceding claim, wherein a pixel comprises at least three sub-pixels having different colors, e.g. a red, green and blue sub-pixel, arranged in the row direction.

8. A device as claimed in any preceding claim, wherein each sub-pixel light output area has the same shape.

9. A device as claimed in claim 8, wherein each sub-pixel light output area has a corresponding output intensity profile, when projected from the elongate element width direction to the row direction, in the form of a rectangle, a triangle, a top hat or a raised cosine function.

10. A device as claimed in any preceding claim, wherein the sub-pixel light output areas include at least two different shapes.

11. A device as claimed in any preceding claim, wherein the view forming arrangement comprises lenticular lenses.

12. A device as claimed in claim 11, wherein the tangent of the slant angle is 1/9, or 1/6, or 1/3.

**13.** A device as claimed in any preceding claim comprising a switchable 2D/3D display, wherein the view forming arrangement is switchable.

**14.** An autostereoscopic display device comprising:

a display (3) having an array of display pixels (5) for producing a display image, wherein the display pixels are arranged in orthogonal rows and columns of color sub-pixels; and
a view forming arrangement (9) arranged in registration with the display for projecting a plurality of views towards a user in different directions,
wherein the view forming arrangement comprises elongate elements which extend at an acute slant angle to the column direction of the color sub-pixels, each sub-pixel being associated with a closest one of the elongate elements,
wherein each sub-pixel comprises a plurality of individually addressable sub-pixel light output areas stacked generally in the column direction,
wherein each sub-pixel light output area has a centre of area, wherein the centres of area are aligned along a line which is offset from the column direction to be closer to the direction parallel to the elongate elements.

**15.** A method for producing an autostereoscopic display output, comprising:

producing an image using a display (3) having an array of display pixels (5) arranged in orthogonal rows and columns of color sub-pixels, wherein each sub-pixel comprises a plurality of individually addressable sub-pixel light output areas (201,202) stacked generally in the column direction; and
projecting a plurality of views towards a user in different directions using a view forming arrangement (9) arranged in registration with the display, wherein the view forming arrangement comprises elongate elements (11) which extend at an acute slant angle to the column direction of the color sub-pixels, each sub-pixel being associated with a closest one of the elongate elements,
wherein each sub-pixel light output area has a corresponding light output intensity profile along the width direction of the associated elongate element, wherein the method comprises offsetting the sub-pixel light output areas from the column direction such that the intensity profiles are closer together along the width direction.

1

5

7

3

9

11

FIG. 1

FIG. 2

FIG. 3A

FIG. 3B

FIG. 3C

FIG. 4

RGB_3

FIG. 5

FIG. 6

FIG. 7

FIG. 8

FIG. 9

FIG. 10

FIG. 11

FIG. 12

FIG. 13

EP 2 905 959 A1

FIG. 14

EP 2 905 959 A1

(b)

(c)

502  501  503  500

y/Δx

x/Δx

FIG. 15

(a)

(b)

(c)

(a)

FIG. 16

EP 2 905 959 A1

Europäisches
Patentamt

European
Patent Office

Office européen
des brevets

**EUROPEAN SEARCH REPORT**

Application Number

EP 14 18 3376

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2012/169466 A1 (SHARP KK [JP]; KATOH HIROMI; TANAKA KOHHEI) 13 December 2012 (2012-12-13) * figure 5 * | 1-9, 11-15 | INV. H04N13/04 |
| A | | 10 | |

----- 

TECHNICAL FIELDS
SEARCHED        (IPC)

H04N

The present search report has been drawn up for all claims

| Place of search | Date of completion of the search | Examiner |
|---|---|---|
| The Hague | 24 October 2014 | Wahba, Alexander |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

**ANNEX TO THE EUROPEAN SEARCH REPORT
ON EUROPEAN PATENT APPLICATION NO.**                    EP 14 18 3376

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2014

| Patent document cited in search report | Publication date | Patent family member(s) | Publication date |
|---|---|---|---|
| WO 2012169466 A1 | 13-12-2012 | NONE | |

EP 2 905 959 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6064424 A1
- WO 2006117707 A2
- WO 2007054851 A
- US 6069650 A